(19) Europäisches Patentamt

European Patent Office

Office européen des brevets

(11) EP 1 085 675 A2

(12) EUROPEAN PATENT APPLICATION

(43) Date of publication:
21.03.2001 Bulletin 2001/12

(51) Int. Cl.<sup>7</sup>: H04B 7/005

(21) Application number: 00307590.0

(22) Date of filing: 04.09.2000

(84) Designated Contracting States:
AT BE CH CY DE DK ES FI FR GB GR IE IT LI LU MC NL PT SE
Designated Extension States:
AL LT LV MK RO SI

(30) Priority: 14.09.1999 US 396825

(71) Applicant:
LUCENT TECHNOLOGIES INC.
Murray Hill, New Jersey 07974-0636 (US)

(72) Inventors:
• Gang, Li
Bridgewater, New Jersey 08807 (US)
• Liwa, Wang
Morris Plains, New Jersey 07950 (US)
• Pengfei, Zhu
Morris Plains, New Jersey 07950 (US)

(74) Representative:
Watts, Christopher Malcolm Kelway, Dr. et al
Lucent Technologies (UK) Ltd,
5 Mornington Road
Woodford Green Essex, IG8 0TU (GB)

(54) **Power control method for broadcast messages**

(57) A method for adjusting a protocol signal to be transmitted based on adjustments made to a detected protocol signal. The detected protocol signal carries adjustment information made to such signal to increase the likelihood of the signal being detected. The adjustment information is retrieved from the detected protocol signal and is used to adjust at least one characteristic of the protocol signal to be transmitted thereby also increasing the likelihood that such a signal (i.e., protocol signal to be transmitted) will be detected.

FIG. 3

```
ACTIVATE USER EQUIPMENT ─300
        │
        ▼
MONITOR PAGING CHANNEL
FOR PROTOCOL SIGNALS ─302
        │
        ▼
    RECEIVE
PROTOCOL MESSAGE ?  ─304   NO
        │ YES
        ▼
TRANSMIT PROBE SIGNAL
WITH PROBE NUMBER ─306
        │
        ▼
RECEIVE APPROPRIATE
PROTOCOL MESSAGE IN
RESPONSE TO TRANSMITTED  ─308   NO
PROBE MESSAGE ?
        │ YES
        ▼
COMPLETE PROTOCOL
APPROPRIATELY ─310

INCREASE PROBE POWER ─312
```

EP 1 085 675 A2

## Description

### Background of the Invention

### Field of the Invention

The present invention is generally related to a method for controlling adaptively the power of various messages broadcast by communication equipment to increase the likelihood that such messages are detected.

### Description of the Related Art

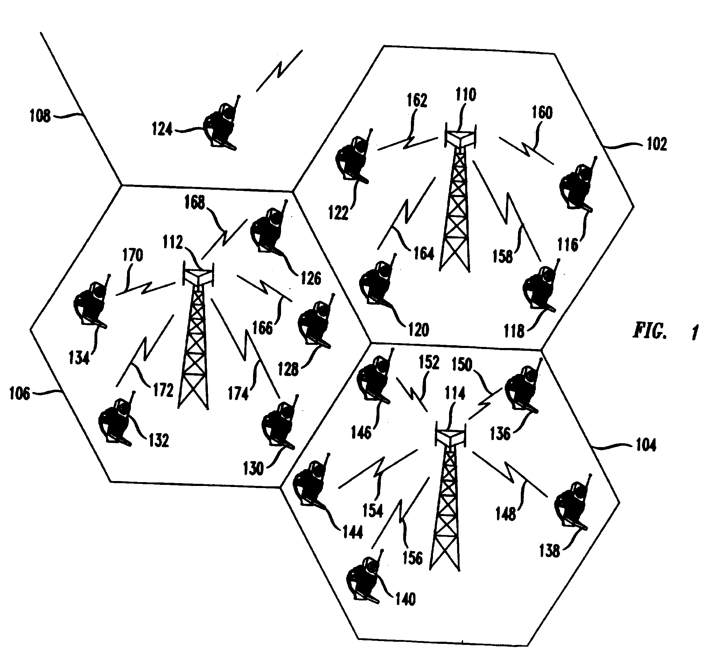

Communication systems, and in particular, wireless communication systems comprise a plurality of communication channels through which subscribers of such systems communicate with each other and with the system. A portion of a typical wireless communication system is shown in FIG. 1. The wireless communication system of FIG. 1 depicts a cellular system comprising cells (e.g., 102, 104, 106, 108) whereby each cell is a symbolic representation of the physical terrain or geographical region covered by communication network equipment commonly known as cell sites or base stations (e.g., 110, 112, 114).

Each base station has system equipment comprising radio equipment (i.e., transmitter, receiver, modulator, demodulator) that are used to transmit and/or receive communication signals between a base station and a user equipment. The system equipment can also be located at places other than base stations. The term "user" hereinafter is used interchangeably with the term "subscriber" to indicate an entity (i.e., person, facility or a combination thereof) who is allowed access (when possible) to the communication system. Access to the communication system is the ability of a subscriber to make use of the resources (e.g., system equipment, communication channels) of the communication system. The user equipment (e.g., 140 in cell 104) is typically a cellular phone or any other communication equipment that is used by a subscriber of a communication system. For example, the user equipment can be a wireless portable computer or a pager. The system equipment further comprises processing equipment for retrieving information being carried by the communication signals and for implementing procedures based on communication protocols.

A communication protocol is a set of procedures or processes that dictate how communications between users of the communication system are to be initiated, maintained and terminated. The communication protocol also dictates the communications between a user and system equipment. Communication protocols are part of well known and established standards (e.g., IS-95A, IS-95B, IS-2000) that are followed by operators of communication systems.

Still referring to FIG. 1, each user communicates with a base station via a wireless communication link. For example in cell 104, user 140 communicates with base station 114 via communication link 156. Typically, each wireless communication link comprises several communication channels. For example, for a Code Division Multiple Access (CDMA) wireless system that complies with the IS-95A, IS-95B standards, the communication link comprises an Access channel, a Paging channel and a Traffic channel. The Access channel is a channel through which user equipment transmits protocol information to a base station. Protocol signals (some of which are discussed *infra*.) carry the protocol information. The protocol information is information used by the system equipment operate and/or control the communication system. For example, a user requesting access to the communication system is allowed to use the communication system after various protocol information have been exchanged between the system equipment (i.e., a base station) and the user equipment. In allowing the user to have access to the communication system, the system equipment identify the user as a subscriber of the system, find resources (e.g., communication channels, base station equipment) that can be made available to the user and allow the user to use (transmit/receive information) such resources in accordance with the protocol being followed by the communication system.

The Paging channel is a channel through which system equipment (e.g., base station) broadcast protocol information to users of the communication system. The traffic channel is the channel used by the users to communicate with each other or with the system. The information conveyed through the traffic channel is, for example, voice, data, video, facsimile information or any other information typically conveyed by users of communication systems. The traffic channel consists of two channels: the first channel is called the reverse link through which users transmit information which information is received by the base station (or other system equipment); the second channel is called the forward link through which the base station (or other system equipment) transmits information to a user. Each user has a forward link and a reverse link assigned by the communication system. Generally any communication channel within which signals are only transmitted from user equipment to system equipment is referred to as an "uplink." Conversely, any communication channel within which signals are transmitted only from system equipment to user equipment is referred to as a "downlink." In addition to the other channels discussed above, some CDMA systems also have a pilot channel that is used to assist a user to request and obtain access to the communication system.

The pilot channel is a downlink channel through which the system equipment broadcast a pilot signal that covers a certain area (e.g., cell area) of the communication system. The pilot signal serves as a sort of beacon signal that advertises the existence of the base station for any user who wants access to the communication system. The pilot signal is typically a system defined carrier signal; that is, the pilot signal is typically a signal of a single frequency, $f_c$.

A user initiates a request for access to the communication system by transmitting a protocol signal called a probe signal; thus the probe is an uplink signal. The probe signal is typically also a signal of a certain frequency. The probe has two portions: the first portion is called the preamble which is typically a string of "0" bits or a string of "1" bits; the second portion is a message portion containing protocol information. The preamble is the portion of the probe that allows the base station (or other system equipment) to detect the probe. Once the probe signal is detected by the system equipment, a certain procedure (in accordance with a protocol being followed by the communication system) is initiated which provides access to the user that transmitted the probe signal. In response to the detection of the probe signal, the system equipment, after a certain time period, transmit an "acknowledge" (ACK) signal to the user equipment indicating to the user equipment that the probe signal has been detected. Once the user equipment receives the ACK signal, it proceeds as per the protocol to obtain access to the communication system. The ACK and CAM signals are downlink protocol signals within which are protocol information or messages. For CDMA wireless cellular communication systems that comply with the IS-95A and the IS-95B standards, the ACK message is followed (after a certain time delay) by a Channel Assignment Message (CAM). The CAM (also transmitted by the system equipment) contains various protocol information including information on the allocation of resources (e.g., traffic channel) to the user equipment. For CDMA wireless cellular communication systems that comply with the well known IS-2000 standard, there is an Early ACK message which is another type of an "acknowledge" signal.

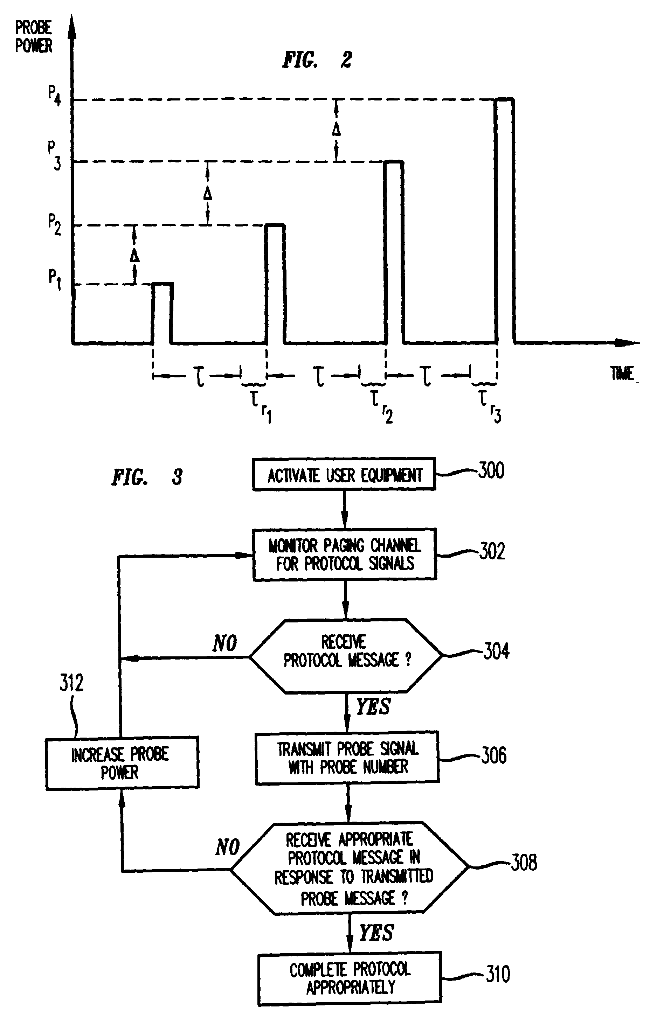

However, in many cases the probe signal is not detected by the system equipment because the power (or amplitude) of the probe signal received by the system equipment is attenuated due to various effects experienced by the communication link. The adverse effects are caused by well known adverse channel conditions such as amplitude attenuation, phase jitter and frequency translation. In such cases, the user equipment transmits the probe signal repeatedly until it receives the ACK message. For each repeated transmission of the probe signal, the power of the probe signal is increased by a system defined amount hereinafter referred to as "Δ." A graph of the power of the probe signal versus time is shown in FIG. 2. Each probe is transmitted after a certain time interval

$$\tau + \tau_{r_i}$$

where $\tau$ is a system defined fixed time interval and

$$\tau_{r_i}$$

is a time interval of random length for the $i^{th}$ probe signal. Thus, according to the graph of FIG. 1, the first transmitted probe has an amplitude of $P_1$, the second probe has an amplitude of $P_2$, the third probe has an amplitude of $P_3$ and so on. In general, the probe power can be expressed by the following equation: (1) $P_i = P_0 + \Delta i$, where the $i^{th}$ transmitted probe has power $P_i$ and the nominal probe power is $P_0$. $P_0$ is a system defined (i.e., network provider defined) nominal probe power that is used as an initial probe power.

Therefore, once the probe signal is detected (by the system equipment) and assuming that the other protocol signals (ACK and CAM) are also detected (by the user equipment), the user equipment then monitors its allocated traffic channel (i.e., its forward link) to test frames conveyed over the traffic channel by the system equipment. Once the user equipment determines that two consecutive frames have been received without any errors, it transmits a preamble signal (via the traffic channel reverse link) to the system equipment indicating that the protocol signals ACK, CAM and test frames were received successfully. It should be noted that the user equipment contains well known error detection schemes or techniques (implemented in hardware or software or both) that detect whether a received frame contains errors. The preamble, once received by the system equipment, is an indication that the user equipment has obtained the proper traffic channel and is ready to convey information over such channel.

However, as with the probe signal, in many cases the ACK and CAM protocol signals are not detected; that is, various channel conditions cause the protocol signals to be attenuated to a point where they cannot be detected by the user equipment. It is likely that the channel conditions that affected adversely (e.g., attenuation of power) the probe signal will have the same or similar adverse effects on the downlink protocol signals (i.e., ACK and CAM) as both the probe signal and the ACK and CAM signals propagate through the same environment. Unlike the probe signal, however, the power of the CAM and ACK signals are not adjusted to compensate for signal power degradation. As a result of the ACK and/or CAM not being detected, the user equipment is unable to complete the protocol procedure and, after a defined time period, the user equipment starts the entire procedure once again. Thus, the ability of a user to obtain access to a communication system is lessened because many times the uplink protocol signals are not detected by the user equipment.

What is therefore needed is a method for adjusting the power of the protocol messages to increase the likelihood that such messages are detected by the user equipment and to reduce the time it takes a user to gain access to the communication system.

## Summary of the Invention

The present invention provides a method for adjusting at least one characteristics of a protocol signal transmitted by equipment of a wireless communication system to increase the likelihood that such a protocol signal is detected by other equipment of the communication system. One particular characteristic of a protocol signal is the power of such a signal. Prior to transmission, the equipment adjusts the power of the protocol signal based on adjustments made to another protocol signal which has already been detected. Because the protocol signals propagate through similar environments, it is likely that any adverse conditions experienced and overcome by the detected protocol signal will also affect the protocol signal to be transmitted. Therefore, when the adjustments made to the protocol signal to be transmitted are based on the adjustments made to the detected protocol signal, there is an increased likelihood that the protocol signal to be transmitted will be detected.

In a preferred embodiment, the detected protocol signal is a probe signal which has a message portion wherein information about adjustments made to the probe signal are stored by the equipment. Once the probe signal is received and detected by system equipment, the adjustment information is retrieved from the probe's message portion. The adjustment information is used to adjust at least one characteristic of a protocol signal to be transmitted by the system equipment to the user equipment thereby increasing the likelihood that such a protocol signal will be detected by the user equipment. In this embodiment, the protocol signal to be transmitted is in response to the detected probe signal. For example, for a CDMA wireless cellular communication system which complies with the IS-95A and IS-95B standards, the protocol signal to be transmitted is either an ACK signal and/or a CAM (or Early ACK for IS-2000 standard) signal transmitted in response to a detected probe signal.

## Brief Description of the Drawings

FIG. 1 depicts a typical topology of part of a cellular communication system;
FIG. 2 is graph of probe signal power level versus time;
FIG. 3 is the method of the present invention for user equipment;
FIG. 4 is the method of the present invention for system equipment.

## Detailed Description

The present invention provides a method for adjusting at least one characteristic of a protocol signal to be transmitted by equipment of a communication system based on adjustments made to at least one characteristic of a detected protocol signal transmitted by another equipment. The adjustments thus made tend to increase the likelihood that the protocol signal to be transmitted will be detected by the other equipment. One particular characteristic of a protocol signal is the power of such a signal. The equipment monitors a channel of the communication system for a protocol signal. The equipment receives and detects a protocol signal from other equipment and retrieves adjustment information from the detected protocol signal. The adjustment information was inserted in the detected protocol signal by the other equipment prior to transmission. The protocol signal to be transmitted by the equipment is adjusted based on the retrieved information and is transmitted to the other equipment thus increasing the likelihood that such a signal will be detected by the other equipment. In some cases, the adjusted protocol signal is being transmitted in response to the detected protocol signal transmitted by the other equipment.

The method of the present invention will be described in terms of a CDMA wireless cellular communication system that complies with the IS-95A or IS-95B or IS-2000 standards. The protocol signal to be transmitted is either an ACK signal (Early ACK for IS-2000 systems) or a CAM signal or both. The protocol signal from which the adjustment information is retrieved is the probe signal. The signal to be transmitted is in response to the detected signal. However, the method of the present invention also included situations where the signal to be transmitted is not in response to the detected. In addition to signal power, other signal characteristics (e.g., amplitude, frequency content, phase) can be adjusted based on adjusted information representing adjustments to be made to such characteristics. The adjustments can be made to more than one signal characteristic.

The method of the present invention is described in terms of user equipment transmitting a protocol signal within which information about at least one adjustment made to at least one characteristic (e.g., power) of the signal is stored. The method of the present invention is also described in terms of system equipment detecting the protocol signal carrying the adjustment information. The system equipment retrieve the adjustment information and adjust at least one characteristic of a protocol signal to be transmitted thereby increasing the likelihood that such a protocol signal will be detected.

Referring now to FIG. 3, there is shown the method of the present invention for user equipment of a communication system. In step 300, the user equipment is activated (e.g., cell phone is switched on). In step 302, the user equipment monitors the Paging channel and the pilot channel for a pilot signal and other protocol signals. The other protocol signals comprise information such as the Access Parameter Message and the System Parameter Message used by the user equipment to obtain access to the communication system. In step 304, if the protocol signals are not detected the method of the present invention returns to step 302 to continue to monitor the Paging channel. When the protocol signals are received and detected, the method of the present invention moves to step 306.

In step 306 the user equipment transmits the probe signal wherein a probe number is inserted in the message portion of the probe signal. The probe number--referred to as n where $i$ is an integer that is equal to or greater than 1--represents the number of times the probe signal has been transmitted by the user equipment. The first time the user equipment transmits the probe signal, it sets $i$=1 and stores $i$ in a portion of the probe message. The probe power is adjusted as per equation (1). A portion of the probe message (e.g., a certain number of bits) can be reserved exclusively for the probe number. Such a portion can be established as part of the standard (i.e., IS-95A and/or IS-95B). The probe number represents one type of adjustment information. Other types of adjustment information relating to other signal characteristics can be used.

In step 308, if the user equipment has received and detected a responding protocol signal (i.e., the ACK protocol signal followed by the CAM protocol signal), the method of the present invention moves to step 310 where the protocol procedure is completed appropriately as per the IS-95 standard. If the ACK protocol signal is not detected by the user equipment within a period of time (defined by the standard), the method of the present invention moves to step 312 where the user equipment increases the probe power by a $\Delta$ amount, increases $i$ by 1 and stores the new value for $i$ in the defined portion of the probe message. The method of the present invention returns to step 302 and 304, and after detecting monitoring the access channel for certain protocol signals and detecting such signals, transmits the adjusted probe signal along with the new probe number once again. Each subsequent time the probe number is retransmitted, the user equipment increases the probe number by 1 and again stores it in a portion of the probe message. Thus the probe number also represents the number of times the probe signal has been adjusted. Thus for n=3, the probe signal has been adjusted 3 times meaning that a probe signal of power $P_3$ was transmitted (see FIG. 2).

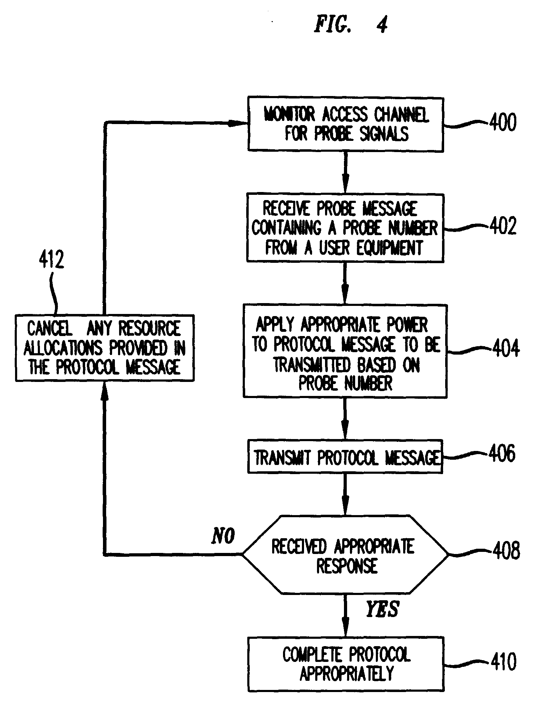

Referring now to FIG. 4, there is shown the method of the present invention for system equipment of a communication system. In step 400, the system equipment are monitoring the Access channel for a probe signal. In step 402, the system equipment receive and detect a probe signal whose message has a portion that has a probe number stored therein. The probe number represents adjustment information. The probe number is retrieved by the system equipment. In step 404, the probe number is decreased by 1 and the resulting number (i.e., $i$-1) is multiplied by $\delta$ where $\delta$ represents a power amount defined by the network provider. It should be noted that $\delta$ is defined by the network provider and thus may or may not equal to $\Delta$, the incremental power amount used to adjust the power of the probe signal. The product, i.e., $(i\text{-}1) \times \delta$, is the amount by which an initial power value of the next protocol signal (i.e., the ACK protocol signal) to be transmitted is adjusted in response to the probe signal. Say, the ACK signal has a nominal power of $p_0$, then the power of the ACK signal to be transmitted is increased by an amount equal to $(i\text{-}1) \times \delta$. The nominal power of the ACK signal is thus adjusted based on the adjustment information (i.e., probe number) carried by the detected probe signal. The new power, $p_{new}$, of the ACK signal is (2) $p_0 + (i\text{-}1) \times \delta$.

In step 406 the adjusted protocol signal, $p_{new}$, is transmitted. After the ACK signal is transmitted, the CAM signal is transmitted after a certain time period defined by the IS-95 standard. The power of the CAM signal is adjusted in the same manner as that of the ACK signal (or Early ACK signal). In step 408, the system equipment wait for the proper response from the user equipment. If the appropriate response is received within a defined time period, the method of the present invention moves to step 410 where the protocol procedure is completed. If the appropriate response was not received, i.e., no preamble signal received over the traffic channel from the user equipment, the method of the present invention moves to step 412 in which all resource allocations made are canceled and the system equipment again begins the procedure by monitoring the Access channel as per steps 400 and 402. In step 404, a new power value is calculated as per equation (2) which power value is based on the latest adjustment information received by the system equipment.

## Claims

1. A method for adjusting at least one characteristic of a signal to be transmitted by equipment of a communication system to increase the likelihood that such a signal is detected by another equipment of the communication system, the method CHARACTERIZED BY THE STEPS OF:

   monitoring a communication channel of the communication system;
   detecting a signal carrying adjustment information; and
   adjusting the signal to be transmitted based on the adjustment information.

2. The method of claim 1 where detecting a signal comprises:

receiving the signal; and

retrieving the adjustment information from the received signal.

3. The method of claim 1 where adjusting the signal to be transmitted comprises: adjusting at least one characteristic of the signal to be transmitted; and transmitting the adjusted signal.

4. The method of claim 3 where the adjusted signal is transmitted in response to the received signal.

5. The method of claim 1 where the equipment is system equipment and the other equipment is user equipment.

6. The method of claim 2 where the adjustment information represents at least one adjustment made to at least one characteristic of the received signal.

7. The method of claim 2 where the received signal and the signal to be transmitted are protocol signals.

8. The method of claim 3 were adjusting at least one signal characteristic of the received signal comprises adjusting a power characteristic of the signal to be transmitted.

9. A method for adjusting an ACK or CAM protocol signal to be transmitted by system equipment of a wireless CDMA communication system, the method CHARACTERIZED BY THE STEPS OF:

monitoring an Access channel of the communication system;
receiving and detecting a probe signal carrying adjusting information representing at least one adjustment made to at least one characteristic of the probe signal; and
adjusting the ACK or CAM protocol signals based on the adjustment information.

10. The method of claim 9 where the at least one characteristic is a nominal power value of the probe signal and the ACK and CAM signals each having a nominal power value.

11. The method of claim 10 where the CDMA communication system complies with the IS-95A and/or IS-95B standards and the probe signal has a message portion part of which contains the adjustment information.

12. The method of claim 11 where receiving and detecting a probe signal further comprises retrieving the adjustment information from the message portion of the probe signal.

13. The method of claim 11 where the adjustment information is a probe number representing an amount of power added to the nominal power of the probe signal prior to its transmission by a user equipment of the communication system.

14. The method of claim 13 where adjusting the ACK or CAM signals comprises:

adding an amount of power amount to the nominal power of the ACK or CAM signal based on the probe number thereby increasing the likelihood that the ACK or CAM signal will be detected.

15. The method of claim 14 further comprising transmitting the adjusted CAM or ACK signals.

16. A method for transmitting a protocol signal by user equipment of a communication system, the method CHARACTERIZED BY THE STEPS OF:

transmitting a protocol signal; and
adjusting the transmitted protocol signal until a responding protocol signal is received

17. The method of claim 16 further comprising:

inserting adjustment information in the protocol signal; and
transmitting the adjusted protocol signal.

18. The method of claim 17 where the adjustment information represents adjustments made to at least one characteristic of the protocol signal.

19. The method of claim 18 where the communication system is a CDMA wireless communication system that complies with the IS-95A and/or IS-95B standards and the protocol signal is a probe signal having a nominal power and comprising a preamble and a message portion.

20. The method of claim 19 where the adjustment information is a probe number that represents at least one adjustment made to the nominal power of the probe signal.

21. The method of claim 19 where inserting adjustment information comprises inserting adjustment information in the message portion of the probe signal.

FIG. 1

*FIG. 2*

*FIG. 3*

ACTIVATE USER EQUIPMENT — 300

MONITOR PAGING CHANNEL FOR PROTOCOL SIGNALS — 302

RECEIVE PROTOCOL MESSAGE ? — 304

312 — INCREASE PROBE POWER

TRANSMIT PROBE SIGNAL WITH PROBE NUMBER — 306

RECEIVE APPROPRIATE PROTOCOL MESSAGE IN RESPONSE TO TRANSMITTED PROBE MESSAGE ? — 308

COMPLETE PROTOCOL APPROPRIATELY — 310

FIG. 4

MONITOR ACCESS CHANNEL FOR PROBE SIGNALS —400

RECEIVE PROBE MESSAGE CONTAINING A PROBE NUMBER FROM A USER EQUIPMENT —402

412

CANCEL ANY RESOURCE ALLOCATIONS PROVIDED IN THE PROTOCOL MESSAGE

APPLY APPROPRIATE POWER TO PROTOCOL MESSAGE TO BE TRANSMITTED BASED ON PROBE NUMBER —404

TRANSMIT PROTOCOL MESSAGE —406

NO    RECEIVED APPROPRIATE RESPONSE —408

YES

COMPLETE PROTOCOL APPROPRIATELY —410

9